Europäisches Patentamt

(19) European Patent Office

Office européen des brevets

(11) Numéro de publication: **0 266 270**
**B1**

(12) **FASCICULE DE BREVET EUROPEEN**

(45) Date de publication du fascicule du brevet:
**27.12.90**

(51) Int. Cl.⁵: **F16L 33/16,** F16L 37/06

(21) Numéro de dépôt: **87402405.2**

(22) Date de dépôt: **26.10.87**

(54) **Dispositif de fixation étanche d'un tube ou tuyau sur un embout.**

(30) Priorité: **30.10.86 FR 8615118**

(43) Date de publication de la demande:
**04.05.88 Bulletin 88/18**

(45) Mention de la délivrance du brevet:
**27.12.90 Bulletin 90/52**

(84) Etats contractants désignés:
**BE DE ES GB IT NL SE**

(56) Documents cités:
**DE-A- 2 048 468**
**DE-B- 1 132 394**
**DE-U- 8 522 921**
**GB-A- 734 228**
**GB-A- 2 121 122**

(73) Titulaire: **HUTCHINSON, 2 rue Balzac, F-75008 Paris(FR)**

(72) Inventeur: **Grabowski, Jean, 42, rue des Vignes,
F-45120 Chalette-sur-Loing(FR)**

(74) Mandataire: **Orès, Bernard et al, Cabinet
ORES 6, Avenue de Messine, F-75008 Paris(FR)**

## Description

L'invention a pour objet un dispositif de fixation étanche d'un tube ou tuyau sur un embout.

Elle vise, en particulier, un dispositif de fixation rapide d'un tuyau souple sur un embout comme, par exemple, une durite sur l'embout d'un radiateur ou d'un système de chauffage de véhicule automobile, sans que cette indication ait, bien entendu, quelque caractère limitatif que ce soit.

On connaît déjà des dispositifs de fixation d'un tuyau souple sur un embout dans lequel l'étanchéité entre le tuyau et l'embout, - en ce qui concerne un fluide circulant dans ledit tuyau -, est assurée par mise en contact intime du tuyau sur l'embout à l'aide d'un organe approprié, le plus généralement un collier de serrage à bande ou fil métallique fixé au tuyau souple préalablement à sa mise en place ou rapporté sur le tuyau après positionnement de celui-ci sur l'embout et qui est serré de manière à tenir compte de la déformation ultérieure du matériau constitutif du tuyau, provoquée par son vieillissement, ainsi que de la pression résiduelle qui doit être suffisante pour assurer l'étanchéité nécessaire dans le temps.

Quel que soit le type de collier de serrage mis en oeuvre, son utilisation présente des inconvénients liés au principe même du collier, comme celui de ne pouvoir présenter un cercle parfait (et par conséquent une pression uniforme sur le tuyau souple entrainant parfois des défauts d'étanchéité), celui d'exiger une gestion des approvisionnements qui doit prendre en compte les tuyaux, d'une part, les colliers et les pièces constitutives de ceux-ci, d'autre part, ou encore ceux liés au montage manuel qui ne peut exclure un positionnement défectueux du collier, dans certains cas, lequel en augmentant les temps de montage provoque un accroissement des coûts.

Il a été également proposé d'améliorer l'étanchéite de raccords de tubes en combinant un joint d'étanchéité creux muni de lèvres annulaires avec une bague métallique, encerclant le joint. Le brevet anglais 734 228 décrit notamment une telle réalisation où la bague métallique est soudée à l'un des tubes, un seul collier de serrage étant alors utilisé. Dans ces dispositifs, le joint délimite avec les extrémités des tubes une chambre où règne la pression du fluide circulant dans les tubes raccordés et l'étanchéité croit quand la pression du flujide augmente, mais décroit dès que celle-ci diminue, même si elle a été précédemment très levée, si bien que même s'ils présentent une meilleure sécurité que les dispositifs à simples colliers, ces dispositifs ne sont pas entièrement satisfaisants.

En outre, les dispositifs connus ne sont pas prévus pour une mise en place à l'aide de robots, ou de manipulateurs, alors que les fabricants d'automobiles qui recherchent une automatisation aussi complète que possible des chaines de montage souhaitent pouvoir assurer le montage d'un tube ou tuyau sur un embout par des techniques de robotisation.

C'est, par conséquent, un but de l'invention de fournir un tel dispositif qui permette de pallier les inconvénients mentionnés ci-dessus des dispositifs à colliers connus.

C'est, en particulier, un but de l'invention de fournir un tel dispositif qui puisse être mis en oeuvre sur des chaines de montage automatiques, notamment dans le domaine de l'industrie automobile.

C'est, encore, un but de l'invention de fournir un tel dispositif qui, après montage, procure une bonne liaison du tube ou tuyau à l'embout et une étanchéité de cette liaison d'autant meilleure en ce qui concerne un fluide circulant dans ledit tuyau que la pression dudit fluide est plus importante.

C'est, enfin, un but de l'invention de fournir un tel dispositif qui permette d'abaisser les coûts d'exploitation par rapport aux dispositifs à colliers connus, tant en ce qui concerne ceux de gestion des stocks que celui du temps de montage.

Un tel dispositif selon l'invention de fixation d'une tube ou tuyau sur un embout comprend un élément solidarisé par sa face interne sur au moins une partie de sa longueur avec la face externe du tube ou tuyau, ledit élément étant conformé pour ménager à son extrémité libre, distante de celle de solidarisation sur le tube ou tuyau, une lèvre périphérique annulaire incurvée vers la surface interne de l'élément et vers son extrémité libre et comportant une extrémité formant clapet, déformable sous l'effet de la pression d'un fluide circulant dans le tube et l'embout et coopérant avec la surface interne de l'élément et la surface interne de l'élément et la surface externe de l'embout pour limiter une chambre communiquant par ladite extrémité avec le volume intérieur au tube ou tuyau et à l'embout de sorte qu'un fluide circulant dans l'embout et le tube remplit ladite chambre pour appliquer ladite lèvre à étanchéité sur l'embout avec une force d'autant plus élevée que la pression dans la chambre est plus élevée, ladite pression dans la chambre augmentant avec la pression du fluide circulant dans l'embout et le tube ou tuyau, mais ne diminuant pas sensiblement lorsque la pression circulant dans l'embout et le tube ou tuyau diminue.

Selon une autre caractéristique de l'invention, l'élément conformé pour ménager la lèvre d'étanchéité est solidarisé avec le tube ou tuyzu par surmoulage.

Pour son maintien sur l'embout qui, de façon en soi connue, présente un bourrelet d'extrémité, le dispositif est muni de parties en saillie sur la face interne de l'élément a lèvre, lesdites parties étant conformées pour permettre un enfilage aisé à l'aide d'un manipulateur, d'un robot ou analogue du tube ou tuyau sur l'embout d'une part et, d'autre part, le passage de fluide circulant dans l'embout et le tube ou tuyau jusqu'à ladite chambre adjacente à la lèvre d'étanchéité.

Dans un mode d'exécution préféré, lesdites parties en saillie sont ménagées par des voiles s'étendant radialement sur la surface interne dudit élément et dont la section droite, par un plan passant par l'axe de révolution du dispositif, est quelque peu tronconique pour faciliter l'enfilage du dispositif sur l'embout tout en s'opposant à un mouvement de sens inverse, de retrait du dispositif.

Selon une autre caractéristique de l'invention, l'élément à lèvre est garni, au voisinage de son extrémité adjacente à ladite lèvre, d'une bague à collerette prévue pour s'opposer à la pression exercée par le fluide présent dans la chambre limitée par ladite lèvre et, ainsi, à la déformation de l'extrémité libre du dispositif.

Dans une réalisation préférée, la lèvre est reliée à une couronne d'extrémité limitant ladite chambre par une zone de plus grande déformabilité que le reste de la lèvre.

L'invention vise également une durite pour radiateur ou système de chauffage de véhicule automobile comprenant un dispositif tel que défini ci-dessus.

L'invention sera bien comprise par la description qui suit, faite à titre d'exemple et en référence au dessin annexé dans lequel :

- la figure 1 est une vue en coupe longitudinale d'un dispositif selon l'invention pour une première forme de réalisation ;
- la figure 2 en est une vue partielle pour une variante ;
- la figure 3 est une vue en coupe selon la ligne 3-3 de la figure 1, mais à plus petite échelle.

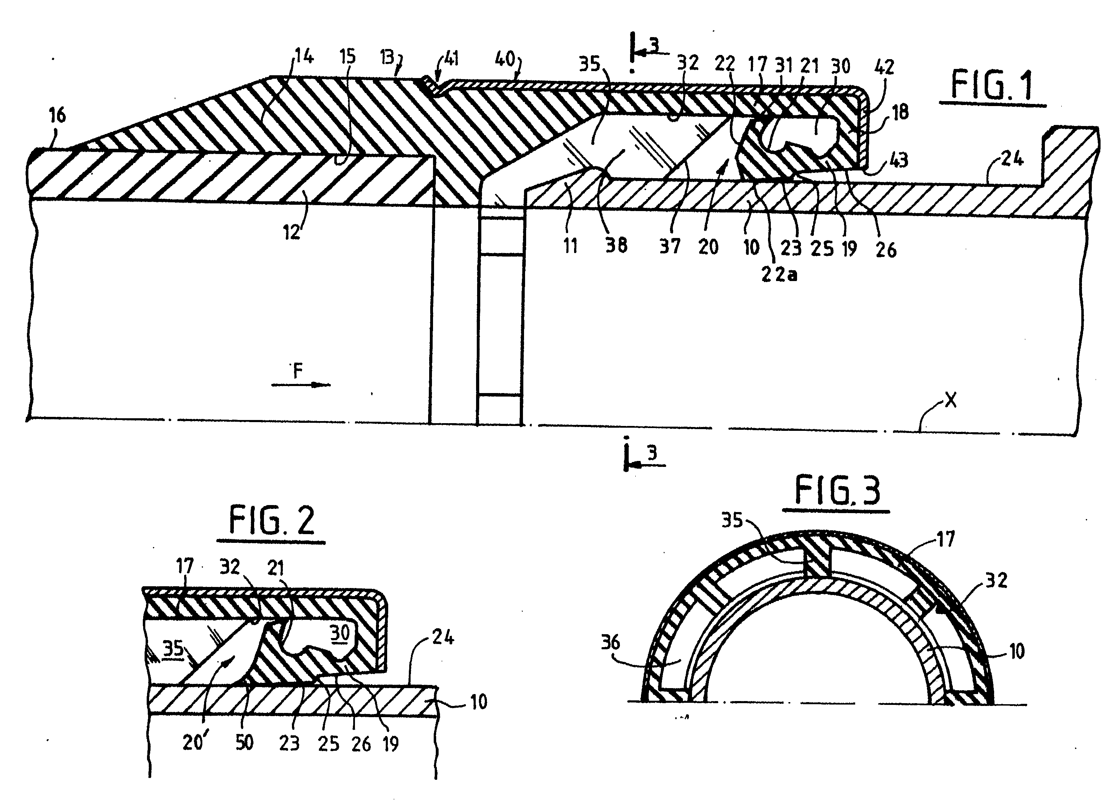

On se réfère d'abord à la figure 1 qui montre une première réalisation d'un dispositif selon l'invention. Celui-ci est prévu pour la fixation sur un embout 10, à bourrelet d'extrémité 11, d'un tube ou tuyau 12, par exemple la durite d'un radiateur ou d'un système de chauffage de véhicule automobile et il comporte essentiellement un élément 13, en forme générale de manchon surmoulé sur le tuyau 12. L'élément 13 comprend ainsi une partie d'extrémité 14 fixée par sa surface interne 15 sur la surface externe 16 du tuyau 12 et, à son autre extrémité, une partie cylindrique 17, de plus faible épaisseur que la partie 14, et qui se termine par une couronne 18 s'étendant sensiblement perpendiculairement à l'axe de symétrie X du dispositif. A la couronne 18 est attachée, par une zone 19 de plus grande déformabilité, une lèvre 20 dirigée vers l'intérieur de l'élément 13, et dont la hauteur est telle qu'elle vient au contact de la partie 17.

Comme bien visible sur la figure 1, la section droite de la lèvre 20 par un plan passant par l'axe X, est un profil qui, à partir de la zone 19, comprend une partie interne 21 en forme de gouttière à bord plat, une face d'extrémité 22 à redent qui, à partir de sa zone de contact 22ª avec la surface extérieure 24 de l'embout dans la condition d'utilisation du dispositif, se poursuit en direction de la zone 19 par une partie rectiligne 23, puis après un ressaut 25 par une partie rectiligne inclinée 26 se raccordant à la couronne 18.

La lèvre 20, la partie cylindrique 17 et le fond en couronne 18 ménagent ainsi une chambre annulaire 30 laquelle est propre à communiquer avec le volume intérieur à l'embout 10 et au tuyau 12 par un passage qui est ménagé entre la surface interne 32 de la partie cylindrique 17 et l'extrémité 31 de la lèvre 20 lorsque celle-ci est déplacée à l'écartement de la partie 17 avec laquelle elle coopère à la manière d'un clapet, de sorte que la pression qui règne à l'intérieur de la chambre 30 (pression qui assure l'étanchéité) peut être très supérieure à celle du fluide circulant dans l'embout et le tube ou tuyau si la pression du fluide qui circule a été supérieure précédemment à la pression actuelle. Ainsi, si la pression a été à un moment assez forte pour que l'étanchéité soit parfaite, il n'y aura pas de fuite par la suite même si la pression devient très faible, ce qui résout le difficile problème de l'étanchéité aux basses pressions.

Selon une autre caractéristique de l'invention, des moyens sont prévus pour s'opposer à l'extraction non voulue du dispositif par rapport à l'embout tout en permettant l'enfilage aisé du tuyau 12 équipé du dispositif sur l'embout 10 à l'aide d'un manipulateur, d'un robot ou analogue. Dans la réalisation décrite et représentée, ces moyens sont constitués par des voiles 35, figures 1 et 3, dépendant radialement de la surface interne 32 de la partie cylindrique 17 et régulièrement répartis au point de vue angulaire sur ladite surface cylindrique 17 de sorte qu'ils ménagent des passages 36 par lesquels le fluide circulant à l'intérieur de l'embout et du tuyau peut passer dans la chambre 30 lorsque le clapet que forme la lèvre 20 est ouvert.

Les voiles 35, par exemple au nombre d'une dizaine, présentent une zone antérieure 37, c'est-à-dire la plus voisine de l'extrémité libre du dispositif, qui est inclinée sur l'axe X et une partie médiane interne 38 de forme conjuguée de celle du bourrelet 11 de l'embout 10, de sorte que lorsque le dispositif est rapporté sur ledit embout, le plus simplement par déplacement relatif dans le sens de la flèche F, lesdits voiles n'opposent pas de résistance appréciable au franchissement du bourrelet de l'embout tandis qu'une extraction non voulue est interdite lorsque la zone médiane 38 desdits voiles coopère avec le bourrelet 11.

Au maintien du dispositif sur l'embout contribue également une bague 40 rapportée sur la face externe de la partie cylindrique 17 avec une collerette 42 sur la couronne 18, ladite bague étant maintenue en place sur l'élément 13 par un clipsage montré en 41. La collerette 42 présente une ouverture centrale 43 dont le diamètre est légèrement supérieur à celui de la surface latérale externe 24 de l'embout de sorte qu'elle ne s'oppose pas au franchissement du bourrelet 11 lors de la mise en place du dispositif. Après celle-ci la lèvre 20 coopère à faible pression avec l'embout 10, de sorte qu'elle ne subit pas de dommages. Lorsqu'un fluide sous pression circule dans l'embout 10 et le tuyau 12, il remplit la chambre 30 qu'il atteint après traversée des passages 36 et du clapet que forme la lèvre 20 et provoque l'application à pression de la lèvre 20 sur l'embout, une déformation vers l'extérieur du dispositif étant interdite par la bague 40.

Le dispositif est ainsi de mise en oeuvre simple, de montage aisé et de durée de fonctionnement élevée.

Lorsqu'il est destiné à équiper des radiateurs ou systèmes de chauffage de véhicules automobiles, le matériau constitutif de l'élément 13 est avantageusement choisi pour permettre des températures d'utilisation comprises entre -40 et +120°C avec, en outre, une bonne tenue au flu age, une résistance chimique suffisante aux projections d'huile, de gazole et d'essence ainsi que de bonnes caractéristiques de vieillissement en température.

Des matériaux remplissant les conditions ci-dessus sont, par exemple, ceux connus du type des EPDM, des PVC nitrile ou à base de silicones.

De bons résultats ont été obtenus dans un dispositif selon l'invention à l'aide d'un élément 13 en caoutchouc EPDM conformé suivant un manchon d'une longueur de 56 mm et dans lequel la partie cylindrique 17 avait une épaisseur de 2 mm, l'embout étant un embout cylindrique d'un diamètre de 32,5 mm.

Dans la variante de réalisation montrée sur la figure 2, l'extrémité du dispositif comprend une lèvre 20' qui, après la partie 21 en gouttière à bords plats en regard de la surface interne 32 de la partie cylindrique 17 se poursuit non pas par une face à redent mais par une zone effilée 50 au contact de la surface externe 24 de l'embout, laquelle se prolonge ensuite par la partie 23, le décrochement 25 et la partie 26 jusqu'à la zone de plus grande déformabilité 19 et la couronne 18.

## Revendications

1. Dispositif de fixation d'un tube ou tuyau (12) sur un embout (10), comprenant un élément (13) solidarisé par sa face interne (15) sur au moins une partie de sa longueur avec la face externe du tube ou tuyau (12), ledit élément (13) étant conformé pour ménager à son extrémité libre, distante de celle de solidarisation sur le tube ou tuyau, une lèvre périphérique annulaire (20) incurvée vers la surface interne de l'élément et vers son extrémité libre (18) et comportant une extrémité (31) formant clapet, déformable sous l'effet de la pression d'un fluide circulant dans le tube et l'embout et coopérant avec la surface interne de l'élément et la surface externe (24) de l'embout pour limiter une chambre (30) communiquant par ladite extrémité (31) avec le volume intérieur au tube ou tuyau et à l'embout de sorte qu'un fluide circulant dans l'embout et le tube remplit ladite chambre pour appliquer ladite lèvre à étanchéité sur l'embout avec une force d'autant plus élevée que la pression dans la chambre est plus élevée, ladite pression dans la chambre augmente avec la pression du fluide circulant dans l'embout et le tube ou tuyau, mais ne diminuant pas sensiblement lorsque la pression circulant dans l'embout et le tube ou tuyau diminue.

2. Dispositif selon la revendication 1, caractérisé en ce que l'élément (13) conformé pour ménager la lèvre d'étanchéité (20) est solidarisé avec le tube ou tuyau (12) par surmoulage.

3. Dispositif selon la revendication 1, caractérisé en ce que pour le maintien du dispositif sur l'embout qui, de façon en soi connue, présente un bourrelet d'extrémité (11) on prévoit des parties (35) en saillie sur la face interne (32) de l'élément (13), lesdites parties étant conformées pour permettre un enfilage aisé, à l'aide d'un manipulateur, d'un robot ou analogue du tube ou tuyau sur l'embout d'une part et, d'autre part, le remplissage de ladite chambre (30) en fluide circulant dans l'embout et le tube ou tuyau.

4. Dispositif selon la revendication 3, caractérisé en ce que lesdites parties en saillie sont ménagées par des voiles (35) s'étendant radialement sur la surface interne (32) dudit élément (13) et dont la section droite, par un plan passant par l'axe de révolution (X) du dispositif est quelque peu tronconique pour faciliter l'enfilage du dispositif sur l'embout tout en s'opposant à un mouvement de retrait en sens inverse.

5. Dispositif selon l'une quelconque des revendications précédentes, caractérisé en ce que l'élément (13) est muni à son extrémité libre au voisinage de laquelle est prévue la lèvre d'étanchéité (20), d'une bague (40) à collerette (42) laquelle s'oppose à la pression exercée par le fluide présent dans la chambre (30) limitée par ladite lèvre.

6. Dispositif selon l'une quelconque des revendications précédentes, caractérisé en ce que la lèvre (20) est reliée à une couronne d'extrémité (18) limitant ladite chambre (30) par une zone (19) de plus grande déformabilité que le reste de la lèvre.

7. Durite pour radiateur ou système de chauffage de véhicule automobile, caractérisée en ce qu'elle comprend un dispositif selon l'une quelconque des revendications précédentes.

## Patentansprüche

1. Vorrichtung zur Befestigung eines Rohrs oder Schlauchs (12) auf einem Übergangsrohrstück (10), umfassend ein Element (13), welches durch seine Innenseite (15) auf wenigstens einem Teil ihrer Länge mit der Außenseite des Rohrs oder Schlauchs (12) fest verbunden ist, wobei dieses Element (13) so gestaltet ist, daß an seinem freien Ende, welches von demjenigen der festen Verbindung auf dem Rohr oder Schlauch entfernt ist, eine ringförmige Umfangslippe (20) angeordnet ist, die nach der inneren Oberfläche des Elements und nach seinem freien Ende (18) zu bogenförmig ist und ein Ende (31) aufweist, das ein Ventil bildet, welches unter der Wirkung des Drucks eines in dem Rohr und dem Übergangsrohrstück zirkulierenden Fluids deformierbar ist und mit der inneren Oberfläche des Elements und der äußeren Oberfläche (24) des Übergangsrohrstücks zusammenwirkt, um eine Kammer (30) zu begrenzen, welche durch das erwähnte Ende (31) mit dem inneren Volumen des Rohrs oder Schlauchs und mit dem Übergangsrohrstück in der Weise verbunden ist, daß ein Fluid, welches in dem Übergangsrohrstück und dem Rohr zirkuliert, die erwähnte Kammer füllt, um die erwähnte Dichtheitslippe mit einer Kraft auf das Übergangsrohrstück aufzudrücken, die um so mehr erhöht ist, je mehr der Druck in der Kammer erhöht ist, wobei der erwähnte Druck in der Kammer mit dem Druck des Fluids, das in dem Übergangsrohrstück und dem Rohr oder Schlauch zirkuliert, zunimmt, aber nicht wesentlich abnimmt, wenn der Druck, der in dem Übergangsrohrstück und dem Rohr oder Schlauch zirkuliert, abnimmt.

2. Vorrichtung nach Anspruch 1, dadurch gekennzeichnet, daß das Element (13), welches so geformt ist, daß die Abdichtungslippe (20) vorgesehen ist, mit dem Rohr oder Schlauch (12) durch Überformen fest verbunden ist.

3. Vorrichtung nach Anspruch 1, dadurch gekennzeichnet, daß für die Sicherung der Vorrichtung auf dem Übergangsrohrstück, welches in an sich bekannter Weise eine Endwulst (11) aufweist, vorspringende Teile (35) auf der Innenseite (32) des Elements (13) vorgesehen sind, wobei diese Teile so gestaltet sind, daß einerseits ein leichtes Aufziehen des Rohrs oder Schlauchs auf dem Übergangsrohrstück mit Hilfe eines Manipulators, Roboters oder ähnlichem und andererseits die Füllung der erwähnten Kammer (30) mit Fluid, das in dem Übergangsrohrstück und dem Rohr oder Schlauch zirkuliert, ermöglicht wird.

4. Vorrichtung nach Anspruch 3, dadurch gekennzeichnet, daß die erwähnten vorspringenden Teile durch Scheiben (35) bewerkstelligt sind, die sich radial auf der inneren Oberfläche (32) des erwähnten Elements (13) erstrecken und deren Querschnitt durch eine Ebene, welche durch die Drehachse (X) der Vorrichtung hindurchgeht, ein wenig kegelstupfartig ist, um das Aufziehen der Vorrichtung auf das Übergangsrohrstück zu erleichtern, während sie einer Rückziehbewegung in umgekehrter Richtung entgegenwirken.

5. Vorrichtung nach irgendeinem der vorhergehenden Ansprüche, dadurch gekennzeichnet, daß das Element (13) an seinem freien Ende, in dessen Nähe die Abdichtungslippe (20) vorgesehen ist, mit einer Buchse (40) mit Flansch (42) versehen ist, der dem Druck entgegenwirkt, welcher durch das Fluid ausgeübt wird, das in der Kammer (30), welche durch die erwähnte Lippe begrenzt ist, vorhanden ist.

6. Vorrichtung nach irgendeinem der vorhergehenden Ansprüche, dadurch gekennzeichnet, daß die Lippe (20) mit einem die erwähnte Kammer (30) begrenzenden Endbund (18) durch eine Zone (19) größerer Deformierbarkeit als ihn der Rest der Lippe hat, verbunden ist.

7. Schlauch- bzw. Rohrverbindung für einen Kühler oder ein Heizsystem eines Kraftfahrzeugs, dadurch gekennzeichnet, daß sie eine Vorrichtung nach irgendeinem der vorhergehenden Ansprüche umfaßt.

**Claims**

1. Device for fixing a pipe or hose (12) to a spigot (10) comprising an element (13) secured by its internal face (15) over at least a part of its length to the external face of the pipe or hose (12), said element (13) being shaped so as to form at its free end, distant from that secured to the pipe or hose, a peripheral annular lip (20) curved towards the internal surface of the element and towards its free end (18) and comprising an end (31) forming a valve which is deformable under the effect of the pressure of a fluid flowing through the pipe and the spigot and cooperating with the internal surface of the element and the external surface (24) of the spigot so as to define a chamber (30) communicating through said end (31) with the volume inside the pipe or hose and the spigot, so that a fluid flowing through the spigot and the pipe fills said chamber to apply said sealing lip on the spigot with a force which is all the higher, the higher the pressure in the chamber, said pressure in the chamber increasing with the pressure of the fluid flowing through the spigot and the pipe or hose, but not substantially decreasing when the pressure in the spigot and the pipe or hose decreases.

2. Device according to claim 1, characterized in that the element (13) shaped for forming the sealing lip (20) is secured with the pipe or hose (12) by being moulded thereon.

3. Device according to claim 1, characterized in that, in order to maintain it on the spigot which, in a way known per se, has an end shoulder (11), the device has projecting portions (35) on the internal face (32) of the element (13), said portions being formed so that the pipe or hose may be readily fitted on the spigot by means of a manipulator, robot or the like, and filling of the said chamber (30) with fluid flowing in the spigot and the pipe or hose.

4. Device according to claim 3, characterized in that said projecting portions are formed by webs (35) extending radially over the internal surface (32) of said element (13) and whose cross section, through a plane passing through the axis of revolution (X) of the device, is somewhat frustroconical to facilitate fitting of the device on the spigot while opposing a withdrawal movement in the opposite direction.

5. Device according to any one of the preceding claims, characterized in that the element (13) has, at its free end in the vicinity of which said sealing lip (20) is provided, a ring (40) with a flange (42) provided for opposing the pressure exerted by the fluid present in the chamber (30) defined by said lip.

6. Device according to any one of the preceding claims, characterized in that the lip (20) is connected to an end ring (18) defining said chamber (30) by a zone (19) with greater deformability than the rest of the lip.

7. Hose connection for a motor vehicle radiator or heating system, characterized in that it comprises a device according to any one of the preceding claims.

FIG.1

FIG.2

FIG.3

EP 0 266 270 B1